Europäisches Patentamt

European Patent Office

Office européen des brevets

(19)

(11) Numéro de publication: **0 370 894**
**A1**

(12) **DEMANDE DE BREVET EUROPEEN**

(21) Numéro de dépôt: **89403207.7**

(22) Date de dépôt: **21.11.89**

(51) Int. Cl.5: **B65G 13/06, B65G 47/31**

(30) Priorité: **22.11.88 FR 8815149**

(43) Date de publication de la demande:
**30.05.90 Bulletin 90/22**

(84) Etats contractants désignés:
**BE DE ES GB IT**

(71) Demandeur: **RENAULT AUTOMATION**
**8/10 avenue Emile Zola**
**F-92109 Boulogne-Billancourt(FR)**

(72) Inventeur: **Thurier, Yvan**
**6, Rue des Charmes**
**F-94320 Thiais(FR)**

(74) Mandataire: **Saint Martin, René**
**Régie Nationale des Usines Renault 8 & 10,**
**avenue Emile Zola**
**F-92109 Boulogne Billancourt(FR)**

(54) **Dispositif pour la réduction du temps d'échange de palettes sur une ligne d'assemblage automatique.**

(57) Suivant l'invention, ce dispositif accélérateur comprend :
- un tronçon d'échange (6) isolé du reste du convoyeur (2) au moyen d'une roue libre (8) à une extrémité et par la suppression d'un accouplement (10) à l'autre extrémité,
- un motoréducteur rapide (18) qui entraîne ce tronçon d'échange (6) au moyen d'une seconde roue libre (20).
Application : aux lignes d'assemblage automatique.

# DISPOSITIF POUR LA REDUCTION DU TEMPS D'ECHANGE DE PALETTES SUR UNE LIGNE D'ASSEMBLA-GE AUTOMATIQUE

La présente invention se rapporte au domaine de l'assemblage. Elle vise plus particulièrement un dispositif permettant de réduire le temps d'échange de palettes sur une ligne d'assemblage automatique.

La réduction du temps d'échange des palettes peut être obtenue, de façon connue, à l'aide d'un injecteur mécanique qui entraîne positivement les deux palettes. Cet injecteur mécanique est généralement réalisé au moyen d'une barre de transfert munie de taquets. Un motoréducteur agissant sur un ensemble pignon-crémaillère ou un vérin pneumatique ou hydraulique, assure l'entraînement de cette barre.

Ce dispositif présente comme inconvénient majeur le risque d'accident occasionné par des forces importantes mises en jeu avec un entraînement positif de ces palettes.

Il nécessite de plus un environnement mécanique dont l'intégration s'avère coûteuse.

L'invention a donc pour but de remédier à ces inconvénients. A cet effet, elle a pour objet un dispositif pour la réduction du temps d'échange de palettes sur une ligne d'assemblage automatique, du type intégré à un convoyeur entraîné latéralement par des arbres de transmission.

Suivant une particularité essentielle, ce dispositif accélérateur comprend un tronçon d'échange isolé du reste du convoyeur par une roue libre à une extrémité et par la suppression d'un accouplement à l'autre extrémité, d'une part, et une motoréducteur rapide qui entraîne ce tronçon d'échange au moyen d'une seconde roue libre, d'autre part. Cette disposition permet de façon simple une augmentation locale et pendant juste le temps nécessaire de la vitesse circonférentielle des rouleaux à friction du convoyeur.

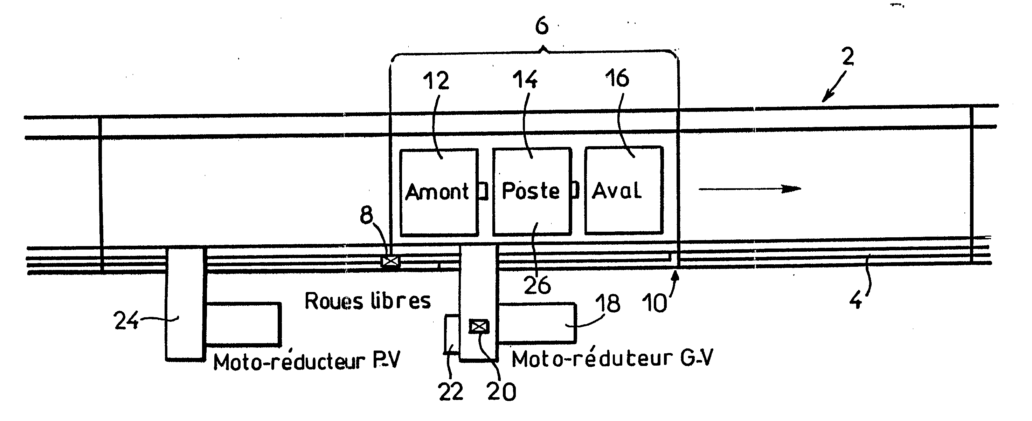

D'autres particularités et avantages de l'invention ressortiront plus clairement à la lecture de la description qui suit d'un mode de réalisation préféré, donné à titre d'exemple non limitatif, en référence à la figure unique annexée qui représente une vue schématique partielle d'une ligne d'assemblage automatique pourvue du dispositif conforme à l'invention.

Sur cette figure, un tel dispositif est intégré à une ligne de convoyeur 2 à rouleaux à friction qui dessert les postes d'une ligne d'assemblage automatique.

Des arbres de transmission 4 assurent l'entraînement latéral de cette ligne de convoyeur.

Le tronçon d'échange 6 concerné par l'invention est isolé du reste du convoyeur au moyen d'une roue libre 8 à une extrémité et par la suppression d'un accouplement 10 à l'autre extrémité.

Ce tronçon 6 prend en charge trois emplacements de palette : un emplacement amont 12, un emplacement de poste 14 et un emplacement aval 16.

Un motoréducteur rapide 18 assure l'entraînement de ce tronçon au moyen d'une seconde roue libre 20.

Un frein à poudre 22 peut être monté en bout du motoréducteur 18, du côté tronçon par rapport à la roue libre 20 afin de ralentir le tronçon d'échange.

Des motoréducteurs standards 24 entraînent le reste du convoyeur.

Ainsi, le tronçon d'échange est entraîné soit par le reste du convoyeur en régime permanent, à faible vitesse, soit par le motoréducteur rapide 18 au cours du temps d'échange, à vitesse accélérée.

En vue de réduire l'énergie cinétique des palettes avant qu'elles n'entrent en contact avec des butées 26, il est possible d'activer le frein à poudre 22.

La fonction essentielle de ce dispositif accélérateur est d'augmenter localement et pendant seulement le temps nécessaire la vitesse circonférentielle des rouleaux afin de réduire considérablement le temps d'échange des palettes à ce poste d'échange.

Cette disposition permet en outre d'assurer une fonction de franchissement de ce poste en état hors service dite "fonction passe-travers" quand le motoréducteur 18 géré par l'armoire de ce poste n'est pas alimenté.

## Revendications

1°) Dispositif pour la réduction du temps d'échange de palettes sur une ligne d'assemblage automatique, avec un convoyeur (2) entraîné latéralement par un arbre de transmission et un moto-réducteur (24), avec un tronçon d'échange (6) entraîné latéralement par un arbre de transmission et un moto-réducteur (18), caractérisé en ce que le tronçon d'échange (6) est entraîné latéralement par un arbre de transmission et un moto-réducteur (18) pouvant procurer au tronçon (6) une vitesse de convoyage supérieure à celle du convoyeur principal (1).

2°) Dispositif suivant la revendication 1, caractérisé en ce que le tronçon d'échange (6) est équipé de deux butées (26) qui déterminent trois emplacements fixes pour les palettes :
- un emplacement amont (12),

- un emplacement de poste de travail (14),
- un emplacement aval (16).

3°) Dispositif suivant la revendication 1, caractérisé en ce qu'un frein à poudre (22) est monté en bout du moto-réducteur (18) du côté tronçon par rapport à la roue libre (20).

4°) Dispositif selon les revendications 1, 2 et 3, caractérisé en ce que le tronçon d'échange (6) peut être intégré en tout endroit du convoyeur (2).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN, vol. 8, no. 26 (M-273)[1463], 3 février 1984; & JP-A-58 183 507 (KAWASAKI SEITETSU K.K.) 26-10-1983 --- | 1,2,4 | B 65 G 13/06 B 65 G 47/31 |
| A | GB-A-2 140 380 (ECH WILL GmbH & CO.) * Page 3, lignes 51-116; figure * --- | 1,2,4 | |
| A | FR-A-2 096 831 (S.A. HEURTEY) * Page 3, ligne 9 - page 5, ligne 37; figure * --- | 1,4 | |
| A | FR-A- 904 309 (AG VORMALS SKODAWERKE) * Pagae 2, ligne 98 - page 3, ligne 77; figures * --- | 1,2,4 | |
| A | PATENT ABSTRACTS OF JAPAN, vol. 10, no. 40 (M-454)[2097], 18 février 1986; & JP-A-60 191 907 (NITSUKEI K.K.) 30-09-1985 ----- | | **DOMAINES TECHNIQUES RECHERCHES (Int. Cl.5)** B 65 G |

Le présent rapport a été établi pour toutes les revendications

| Lieu de la recherche | Date d'achèvement de la recherche | Examinateur |
|---|---|---|
| LA HAYE | 22-02-1990 | VAN DER ZEE W.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant